# EUROPÄISCHE PATENTSCHRIFT

(11) **EP 1 764 289 B1**
(45) Veröffentlichungstag und Bekanntmachung des Hinweises auf die Patenterteilung: **26.11.2008**
(21) Anmeldenummer: 06019533.6
(22) Anmeldetag: 19.09.2006
(51) Int. Cl.: B62D 43/10, B62D 25/08

(54) **Reserveradwanne und Modulanordnung in einem Kraftfahrzeug**
Spare wheel well and arrangement of modules in a motor vehicle
Panier de roue de secours et agencement de modules dans un véhicule automobile

(30) Priorität: 20.09.2005 DE 102005044819
(43) Veröffentlichungstag der Anmeldung: 21.03.2007
(73) Patentinhaber: GM Global Technology Operations, Inc., Detroit, MI 48265-3000 (US)
(72) Erfinder: Dirk Hilß, 64686 Lautertal (DE)
(74) Vertreter: Strauss, Peter

(56) Entgegenhaltungen:
- EP-A2- 1 419 959
- WO-A-03/047910
- DE-A1- 3 940 250
- DE-A1- 10 131 318
- JP-A- 6 087 470
- JP-A- 2005 093 299
- US-A- 5 632 471

## Beschreibung

Die vorliegende Erfindung liegt auf dem Gebiet der Kraftfahrzeugtechnik und betrifft eine Modulanordnung in einem Kraftfahrzeug, sowie ein mit einer solchen Modulanordnung ausgerüstetes Kraftfahrzeug.

Um möglichst kurze Montagezeiten eines Kraftfahrzeugs zu erreichen, ist in der modernen Kraftfahrzeugproduktion ein Trend zu beobachten, dass möglichst viele etwa von einer Zulieferfirma vorgefertigte und vormontierte Module an einer Montagelinie des Kraftfahrzeugs bereitgestellt werden, welche dann nur noch zusammengefügt werden müssen. Oftmals ist jedoch eine Modularisierung von Bauteilen bzw. Fahrzeugkomponenten nur schwierig zu realisieren, und zwar vor allem dann, wenn ein zur automatischen Montage des Moduls geeigneter Montageort nur schwer aufzufinden ist.

In der gattungsgemäßen europäischen Patentanmeldung EP 1419959 A2 und in der deutschen Patentanmeldung DE 10131318 A1 ist jeweils ein Modul zum Einbau in eine Durchbrechung einer Reserveradmulde gezeigt, das mit wenigstens einem zur Aufnahme von Gegenständen geeigneten Hohlraum versehen ist. Das US-Patent Nr. 5,632,471 zeigt ein Luftfederungssystem für ein Kraftfahrzeug, bei dem ein Druckluftbehälter innerhalb eines von der A-Säule geformten Karosseriehohlraums aufgenommen ist.

Demgegenüber besteht die Aufgabe der Erfindung darin, eine verbesserte alternative Modulanordnung in einem Kraftfahrzeug anzugeben.

Diese Aufgabe wird nach dem Vorschlag der Erfindung durch eine Modulanordnung mit den Merkmalen des unabhängigen Anspruchs gelöst. Vorteilhafte Ausgestaltungen der Erfindung sind durch die Merkmale der Unteransprüche angegeben.

Erfindungsgemäß ist eine Modulanordnung in einem Kraftfahrzeug gezeigt, welche eine im Fahrzeugunterboden angeordnete Reserveradwanne und ein außenseitig der Reserveradwanne befestigtes Modul umfasst, wobei das Modul mit wenigstens einem zur Aufnahme von Gegenständen geeigneten Hohlraum versehen ist.

Erfindungsgemäß ist das Modul zur Aufnahme von Gegenständen an der Außenseite (d. h. auf der der Reserveradmulde der Reserveradwanne abgewandten Seite) der Reserveradwanne befestigt, zu welchem Zweck wenigstens ein mechanisches Verbindungsmittel zur kraft- und/oder formschlüssigen Verbindung, wie eine Verschraubung, Vernietung, Verschweißung Verklebung oder dergleichen, einzeln oder in Kombination eingesetzt werden kann. So kann das Modul beispielsweise durch eine Verschraubung mittels Gewindebolzen in Kombination mit einer Verklebung an der Reserveradwanne befestigt sein. Zur Befestigung des Moduls an der Reserveradwanne ist dieses zudem vorteilhaft mit einem Befestigungsflansch versehen, welcher vorteilhaft eine Passform zu den zur Befestigung des Moduls vorgesehenen Stellen der Außenseite der Reserveradwanne aufweist. Die Reserveradwanne ist hierbei beispielsweise als Ausbuchtung des Fahrzeugbodenblechs beispielsweise durch Tiefziehen geformt. Alternativ ist auch möglich, dass die Reserveradwanne nicht durch Tiefziehen des Fahrzeugbodenblechs geformt ist, sondern in einer Durchbrechung des Fahrzeugbodenblechs in Form einer Metall-oder Kunststoffwanne eingesetzt ist. Hierbei ist die Reserveradwanne mit wenigstens einer Durchbrechung versehen, wobei das Modul nach dessen Befestigung an der Reserveradwanne durch die Durchbrechung der Reserveradwanne ragt.

In der erfindungsgemäßen Modulanordnung ist das Modul mit wenigstens einem Hohlraum zur Aufnahme von Gegenständen versehen, wobei es sich bei den Gegenständen vorteilhaft und vorzugsweise um keine Gebrauchsgegenstände des Fahrzeugnutzers, sondern um Bauteile/Komponenten des Kraftfahrzeugs selbst handelt. Hierdurch kann vorteilhaft eine erleichterte automatische Montage von Bauteilen/Komponenten an dem Kraftfahrzeug an einem für einen Montageroboter leicht zu erreichenden Montageort erzielt werden. Die Bauteile/Komponenten des Kraftfahrzeugs sind hierbei vorteilhaft, jedoch nicht zwingend, funktionell gekoppelt und können insbesondere auch Bauteile-/Komponentengruppen umfassen.

Die Gegenstände, wie Bauteile/Komponenten bzw. Bauteile-/Komponentengruppen eines Kraftfahrzeugs, werden zunächst in/an dem Modul vormontiert und das Modul mit vormontierten Gegenständen anschließend an der Außenseite der Reserveradwanne montiert, so dass durch lediglich einen einzigen Montageschritt der Befestigung des Moduls an der Reserveradwanne die im Modul enthaltenen Gegenstände am Kraftfahrzeug montiert werden können, wodurch Fertigungszeit an der Montagelinie eingespart werden kann. Die Module können insbesondere in vorgefertigter bzw. vormontierter Form von einem Zulieferer bezogen werden. Neben einer erleichterten und schnelleren Montage von Gegenständen an der Montagelinie kann weiterhin eine leichter durchzuführende Qualitäts- und Funktionskontrolle der im Modul enthaltenen Gegenstände erfolgen, welche unabhängig und räumlich entfernt von der Montagelinie bereits im Vorfeld durchgeführt werden kann, wodurch wiederum Fertigungszeit an der Montagelinie eingespart werden kann. Elektrischen Strom und/oder Fluide leitende Verbindungen, welche die in dem Modul enthaltenen Gegenstände benötigen, sind durch geeignete Durchbrechungen der Modulwand hindurch geführt oder mit jeweiligen in der Modulwand geformten Anschlussstücken verbunden, so dass elektrischer Strom und/oder Fluide in geeigneter Weise den im Modul enthaltenen Gegenständen zugeführt bzw. von dort abgeführt werden können.

Für eine leichte Vormontage von Gegenständen im/am Modul umfasst das Modul vorteilhaft zwei einen Behälter formende Schalen, die nach erfolgter Vormontage der Gegenstände miteinander gefügt werden können. Die Schalen sind zur Befestigung aneinander vorteilhaft mit entsprechenden Befestigungsflanschen versehen. Erfindungsgemäß ist anstelle einer der Schalen ein Druckbehälter für ein insbesondere gasförmiges Druckmedium angeordnet, welcher mit der anderen der Schalen gefügt ist.

Das erfindungsgemäße Modul ist beispielsweise mit Bauteilen/Komponenten einer Luftfederung des Kraftfahrzeugs versehen, welche einen Kompressor und/oder wenigstens ein Luftventil, was insbesondere in einem Ventilblock aufgenommen sein kann, umfassen können.

Die Erfindung erstreckt sich ferner auf ein Kraftfahrzeug, welches mit einer wie oben beschriebenen Modulanordnung ausgerüstet ist.

Die Erfindung wird nun anhand eines Ausführungsbeispiels näher erläutert, wobei Bezug auf die beigefügten Zeichnungen genommen wird. Es zeigen
- Fig. 1: eine schematische Schnittdarstellung in Fahrzeugquerrichtung einer Ausführungsform der erfindungsgemäßen Modulanordnung;
- Fig. 2: eine schematische Schnittdarstellung in Fahrzeuglängsrichtung der Ausführungsform der erfindungsgemäßen Modulanordnung von Fig. 1;
- Fig. 3: eine schematische Explosionsdarstellung der Ausführungsform der erfindungsgemäßen Modulanordnung von Fig. 1 zur Veranschaulichung der Montageschritte.

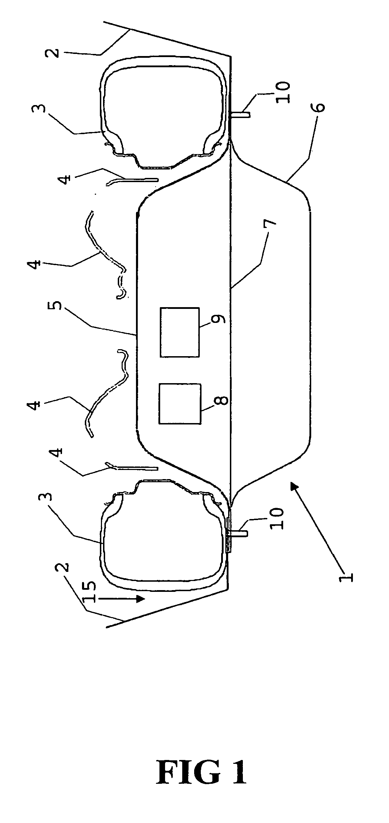

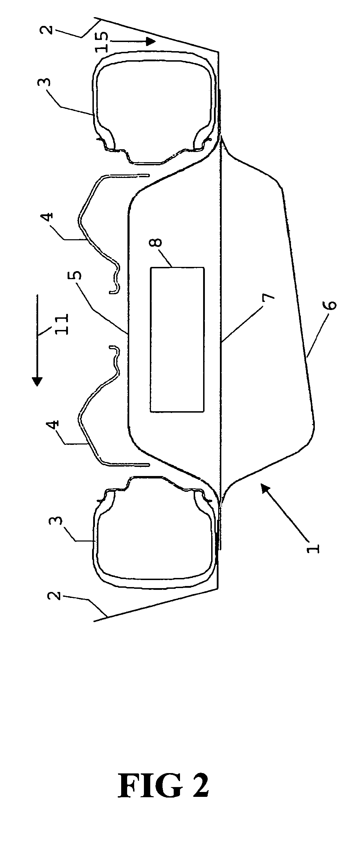

Es wird nun Bezug auf die Figuren 1 bis 3 genommen, worin in einer schematischen Schnittdarstellung in Fahrzeugquerrichtung bzw. Fahrzeuglängsrichtung (die Fahrtrichtung ist durch den Pfeil 11 angegeben), sowie in einer Explosionsdarstellung eine Ausführungsform der erfindungsgemäßen Modulanordnung veranschaulicht ist. Demnach umfasst eine Modulanordnung gemäß vorliegender Erfindung, welche insgesamt mit der Bezugszahl 1 bezeichnet ist, ein Modul mit einer oberen Schale 5 und einem unteren Druckbehälter 6, die an ihren mit Befestigungsflanschabschnitten 13, 14 versehenen Randabschnitten mittels eines kraft- und/oder formschlüssigen, mechanischen Verbindungsmittels, wie einer Verschraubung, miteinander gefügt sind. Das aus der oberen Schale 5 und dem Druckbehälter 6 aufgebaute Modul ist mittels Befestigungsschrauben 10 und einer nicht näher dargestellten Verklebung mit den Befestigungsflanschabschnitten 13, 14 an einer Reserveradwanne 2 an deren Außenseite befestigt. Die Reserveradwanne 2 ist hierbei mit einer Durchbrechung 16 versehen, durch welche im montierten Zustand des Moduls dessen obere Schale 5 ragt.

In der Resereradmulde 15 der Reserveradwanne 2 ist weiterhin ein Reserverad 3 mit der Radfelge 4 gelagert, wobei die obere Schale 5 des Moduls in einer typischer Weise vorhandenen Wölbung der Radfelge 4 aufgenommen ist.

In dem Modul sind in seiner oberen Schale 5, welche als Behälter dient, ein Luftkompressor 8 und ein mit Druckventilen versehener Ventilblock 9 aufgenommen, welche jeweils mit nicht näher dargestellten Strom- und/oder Fluidanschlüssen in der Schalenwand der Schale 5 verbunden sind. Der untere Druckluftbehälter 6 ist zum Halten von Druckluft geeignet ausgebildet, wobei sich im gefügten Zustand der oberen Schale 5 und des Druckluftbehälters 6 eine gasdichte Wand 7 zwischen diesen befindet. Der Druckbehälter 6, der Kompressor 8 und der Ventilblock 9 sind Komponenten einer Luftfederung des Kraftfahrzeugs. Der Kompressor 8 speist hierbei über eine nicht näher dargestellte fluidleitende Verbindung in der Wand 7 den Druckbehälter 6, welcher seinerseits über entsprechende Druckventile des Ventilblocks 9 mit Federelementen der Luftfederung fluidleitend verbunden ist (was in den Figuren nicht näher dargestellt ist).

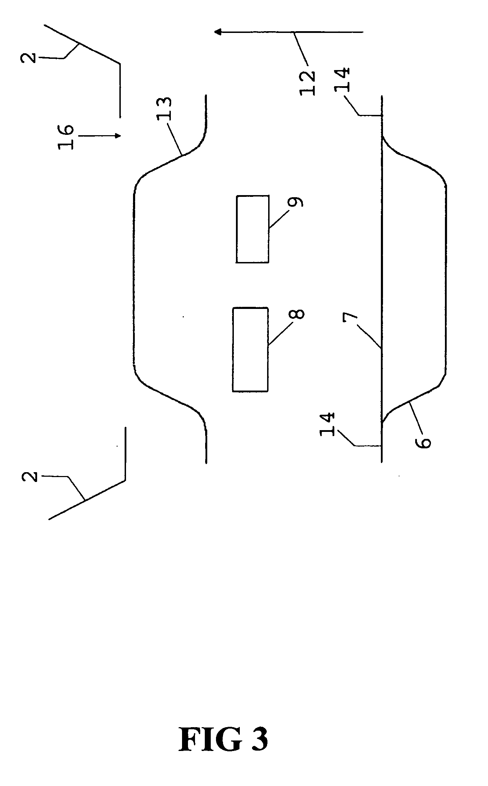

Es wird nun speziell Bezug auf Figur 3 genommen, worin in einer schematischen Explosionsdarstellung die Vormontage des erfindungsgemäßen Moduls und dessen Montage am Kraftfahrzeug veranschaulicht ist. Die Montagerichtung ist in Figur 3 mit dem Pfeil 12 dargestellt. Demnach werden zunächst der Kompressor 8 und der Ventilblock 9 in einer nicht näher dargestellten Weise im Hohlraum der oberen Schale 5 vormontiert (befestigt), wozu herkömmliche form- und/oder kraftschlüssige Befestigungsmittel zur mechanischen Befestigung eingesetzt werden können. Anschließend wird der Druckbehälter 6 mit seinem Befestigungsflansch 14 an dem Befestigungsflansch 13 der Schale 5 beispielsweise mittels Verschraubung (oder einem anderen mechanischen Befestigungsmittel zur form- und/oder kraftschlüssigen mechanischen Verbindung) befestigt. Das nun aus der oberen Schale 5 mit vormontiertem Kompressor 8 und Ventilblock 9 und dem Druckbehälter 6 geformte Modul wird anschließend in der durch Pfeil 12 angegebenen Montagerichtung an der Reserveradwanne 2 beispielsweise mittels Verschraubung und Verklebung (oder einem anderen mechanischen Befestigungsmittel zur form- und/oder kraftschlüssigen mechanischen Verbindung) so befestigt, dass die obere Schale 5 annähernd vollständig durch die Durchbrechung 16 der Reserveradwanne 2 in die Reserveradmulde 15 ragt. Nach erfolgter Montage des Moduls an der Reserveradwanne müssen lediglich noch die Anschlüsse in der Modulwand für elektrisch leitende bzw. fluidleitende Verbindungsleitungen mit den jeweils zugehörigen Verbindungsleitungen verbunden werden.

### Bezugszeichenliste

- 1: Modulanordnung
- 2: Reserveradwanne
- 3: Reserverad
- 4: Felge
- 5: obere Schale
- 6: unterer Druckbehälter
- 7: Wand
- 8: Kompressor
- 9: Ventilblock
- 10: Schraube
- 11: Fahrtrichtung
- 12: Montagerichtung
- 13: Befestigungsflansch
- 14: Befestigungsflansch
- 15: Reserveradmulde
- 16: Durchbrechung

## Patentansprüche

1. Modulanordnung (1) in einem Kraftfahrzeug, welche eine im Fahrzeugunterboden angeordnete Reserveradwanne (2) und ein außenseitig der Reserveradwanne (2) befestigtes Modul (5, 6) umfasst, wobei
- das Modul (5, 6) mit wenigstens einem zur Aufnahme von Gegenständen geeigneten Hohlraum (5) versehen ist,
- die Reserveradwanne (2) mit wenigstens einer Durchbrechung (16) versehen ist, durch die das Modul (5, 6) ragt,
**dadurch gekennzeichnet, dass** das Modul (5, 6) aus einer Schale (5) und einem Druckbehälter (6) für ein gasförmiges Medium, welche miteinander gefügt sind, geformt ist.

2. Modulanordnung (1) nach Anspruch 1, bei welcher die Reserveradwanne (2) in Form einer Ausbuchtung des Fahrzeugunterbodens ausgebildet ist.

3. Modulanordnung (1) nach einem der Ansprüche 1 bis 2, bei welcher in dem Modul (5, 6) wenigstens ein Bauteil/Komponente bzw. Bauteile-/Komponentengruppe des Kraftfahrzeugs enthalten ist.

4. Modulanordnung (1) nach Anspruch 3, bei welcher in dem Modul (5, 6) Bauteile/Komponenten (8, 9) einer Luftfederung des Kraftfahrzeugs enthalten sind.

5. Modulanordnung (1) nach einem der Ansprüche 1 bis 4, bei welcher das Modul wenigstens ein Druckluftventil enthält.

6. Modulanordnung (1) nach einem der Ansprüche 1 bis 5, bei welcher das Modul einen Druckluftkompressor (8) enthält.

7. Fahrzeug, insbesondere Kraftfahrzeug, mit einer Modulanordnung (1) nach einem der vorhergehenden Ansprüche 1 bis 6.

## Claims

1. Arrangement of modules (1) in a motor vehicle comprising a spare wheel well (2) aligned in the undercarriage of the motor vehicle and a module (5, 6) fastened on the external side of the spare wheel well (2), wherein:
- the module (5, 6) with at least an opening (5) for the acceptance of objects,
- the spare wheel well (2) is equipped with at least a through hole (16) through which the module (5, 6) protrudes,
**characterized in that** the module (5, 6) is formed from a shell (5) and a pressure box (6) for a gasiform medium which are connected one with another.

2. Arrangement of modules (1) according to claim 1, in which the spare wheel well (2) is designed in the form of a filet identification of the undercarriage of the motor vehicle.

3. Arrangement of modules (1) according to one of the claims 1 to 2, in which in the module (5, 6) there is at least one structural member / component or group of structural members /components of the motor vehicle.

4. Arrangement of modules (1) according to claim 3, in which in the module (5, 6) there are structural members / components (8, 9) of an air suspension of the motor vehicle.

5. Arrangement of modules (1) according to one of the claims 1 to 4, in which the module contains at least one compressed-air valve.

6. Arrangement of modules (1) according to one of the claims 1 to 5, in which the module contains one compressed-air compressor (8).

7. Vehicle, primarily motor vehicle, equipped with an arrangement of modules (1) according to one of the previous claims 1 to 6.

## Revendications

1. Agencement de module (1)dans un véhicule automobile, lequel comprend un panier de roue de secours (2) monté dans le dessous de caisse du véhicule et un module fixé(5,6)du côté extérieur du panier de roue de secours(2), où le module(5,6) est pourvu d'au moins un compartiment(5) approprié à la réception d'objets, le panier de roue de secours (2) est pourvu d'au moins une perforation(16), par laquelle le module(5,6) s'élève, **caractérisé en ce que** le module (5,6) est formé d'une coque(5) et d'un réservoir sous pression(6) pour un fluide à l'état gazeux, lesquels sont ajoutés ensemble.

2. Agencement de module (1) selon revendication 1, où le panier de roue de secours (2) est conçu sous forme de cavité du dessous de caisse du véhicule.

3. Agencement de module (1) selon une des revendications 1 à 2, où dans le module (5,6) au moins une/un pièce/ composante ou un ensemble de pièces/ composantes du véhicule est comprise.

4. Agencement de module (1) selon revendication 3, où dans le module (5,6) les pièces/ composantes (8,9) d'une suspension pneumatique du véhicule sont comprises.

5. Agencement de module (1) selon une des revendications 1 à 4, où le module comprend au moins un clapet pneumatique.

6. Agencement de module (1) selon une des revendications 1 à 5, où le module comprend un compresseur pneumatique (8).

7. Véhicule, notamment véhicule automobile avec agencement de module (1) selon une des revendications précédentes 1 à 6.
